# EUROPEAN PATENT APPLICATION

(11) **EP 1 494 236 A2**
(43) Date of publication of application: **05.01.2005**
(21) Application number: 04300261.7
(22) Date of filing: 07.05.2004
(51) Int. Cl.: G11B 21/02, G11B 7/08

(54) **Recording or playback machine with a recording or reading device**

(30) Priority: 01.07.2003 DE 10329778
(71) Applicant: Thomson Licensing S.A., 92100 Boulogne-Billancourt (FR)
(72) Inventor: Storz, Martin, 78048 Viilingen-Schwenningen (DE)
(74) Representative: Rittner, Karsten, Dr.

(57) **Abstract**

In order that natural oscillations on a pickup of a recording or playback machine for optical recording carriers are avoided to the greatest extent, or at least shifted into uncritical frequency ranges, a toothed rack which is stiffened, preferably with a rib, and lies by means of drivers against drivers of the pickup is used instead of a flexible toothed rack. All the drivers have guiding bores, through which a guiding rod is passed. Provided between a driver of the toothed rack and a driver of the pickup is a compression and torsion spring, which is configured as a wire spring and both compensates for the axial play between the toothed rack and the pickup and presses the toothed rack against a gearwheel driving it.

## Description

The invention relates to a recording or playback machine with a recording or reading device for recording or reading data onto or from a recording carrier, at least one driver being provided on the optical recording or reading device and guided on a guiding rod by a driver of a toothed rack.

Examples of recording or playback machines are CD or DVD players, which are equipped with at least one optical scanning device, a so-called pickup, in order to read data from an optical recording carrier, a compact disc - CD for short - or a digital versatile disc - DVD for short.

The pickup is positioned over the data tracks of the disk-shaped recording carrier by means of a coarse drive and, if appropriate, also by means of a fine drive for fine setting. The pickup is moved over the recording carrier in the radial direction by means of the coarse drive, which is preferably made up of a toothed rack which is fastened to the pickup and a gearwheel which is in engagement with the toothed rack and is driven by means of an electric motor.

In order that the pickup can be positioned as quickly and accurately as possible over the data tracks of the recording carrier, the coarse drive should operate with as little play as possible.

It is therefore the object of the invention to design the coarse drive of a pickup of a recording or playback machine for recording or reading data onto or from an optical recording carrier with as little play as possible, in order always to achieve quick and accurate positioning of the pickup.

The invention achieves this object by the features specified in claim 1, in that a compression and torsion spring is provided between at least one driver of the recording or reading device and a driver of the toothed rack, which are arranged on a guiding rod. The compression and torsion spring both presses the driver of the toothed rack against a driver of the recording or reading device, to compensate for the axial play of the toothed rack, and presses the toothed rack, which is supported on the recording or reading device, against the gearwheel.

With a compression and torsion spring which as a one-piece spring comprises a helical spring with at least one turn, at each of the ends of which a hook is provided to achieve the torsional effect, both the axial play between the recording or reading device, that is the pickup, and the toothed rack and at the same time the play between the toothed rack and the gearwheel in engagement with it are compensated. As a result, particularly accurate and quick positioning of the pickup is achieved.

Using the compression and torsion spring to compensate for play allows flexible drivers of the toothed rack to be made rigid to achieve greater accuracy and speed. The toothed rack is preferably stiffened by means of a rib.

A pickup with a stiffened toothed rack instead of a flexible one is distinguished by the advantage that natural oscillations of the pickup, which greatly impair both the track control and the focusing, are suppressed to the greatest extent, or at least shifted into an uncritical frequency range. The compression and torsion spring can be produced in an advantageous way with only two turns as a wire spring.

The invention is explained in more detail on the basis of the exemplary embodiments represented in the figures.

In the drawing:
- Figure 1: shows a first exemplary embodiment of a recording or reading device of a recording or playback machine according to the invention, in a perspective view,
- Figure 2: shows an exemplary embodiment of a compression and torsion spring in a perspective view,
- Figure 3: shows a toothed rack with the compression and torsion spring in a perspective view and
- Figure 4: shows a second exemplary embodiment of a recording or reading device of a recording or playback machine according to the invention, in a perspective view.

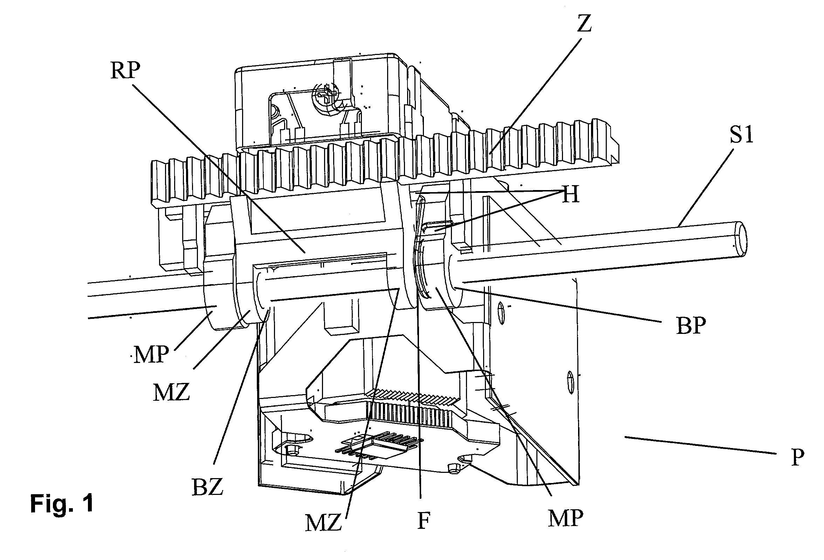

In Figure 1, a recording or reading device, a so-called pickup, of a first exemplary embodiment of a recording or playback machine according to the invention is depicted in a perspective representation.

Arranged spaced apart on the pickup P are two drivers MP, each with a guiding bore BP, through which there is passed a first guiding rod S1, along which the pickup P can be guided by means of a toothed rack Z and a gearwheel (not shown for the sake of overall clarity), which is in engagement with the toothed rack Z and is driven for example by means of an electric motor. Arranged spaced apart on the toothed rack Z are two drivers MZ, each with a guiding bore BZ, through which the first guiding rod S1 is likewise passed. The two drivers MZ of the toothed rack Z lie between the two drivers MP of the pickup P in such a way that these drivers MP serve as stops.

Arranged between a driver MP of the pickup P and a driver MZ of the toothed rack Z is a compression and torsion spring F, which is configured as a helical spring with at least one turn or two turns W. The turns W thereby enclose the first guiding rod S1.

A hook H is provided at each of the ends of the turns of the compression and torsion spring F. One hook H is supported on a driver MP of the pickup P, while the other hook H is supported on a driver MZ of the toothed rack Z. As a result, the toothed rack Z is pressed against the gearwheel. Because of the helical turns W of the compression and torsion spring F, at the same time the axial play between the toothed rack Z and the pickup P is also compensated.

To stiffen the toothed rack Z, its two drivers MZ are connected to each other by means of a rib RP, which lends the toothed rack Z greater rigidity, whereby natural oscillations of the pickup P are greatly damped, or at least shifted into an uncritical frequency range.

The two drivers MZ of the toothed rack Z may alternatively also be configured as a single tubular driver, which may replace the rib.

The drivers MZ of the toothed rack Z and the drivers MP of the pickup P may also change places with one another. In the configuration as shown in Figure 1, the drivers MP of the pickup P enclose the drivers MZ of the toothed rack Z, while in the alternative configuration the drivers MZ of the toothed rack Z enclose the drivers MP of the pickup P.

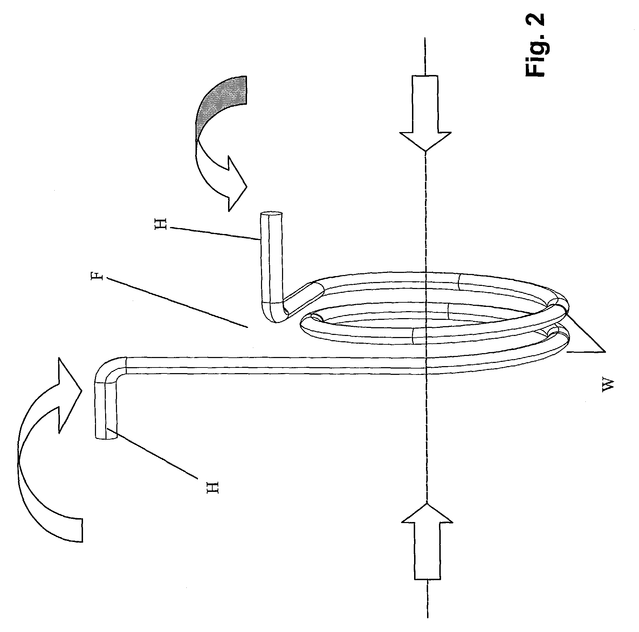

In Figure 2, an exemplary embodiment of a compression and torsion spring F is represented in a perspective view. The compression and torsion spring F is configured as a helical spring with two turns W, at each of the ends of which a hook H is formed. One hook H serves for support on a driver MP of the pickup P, while the other hook H is provided for support on one of the drivers MZ of the toothed rack Z.

It can be regarded as one advantage of the compression and torsion spring F that it can be produced easily and very inexpensively as a wire spring.

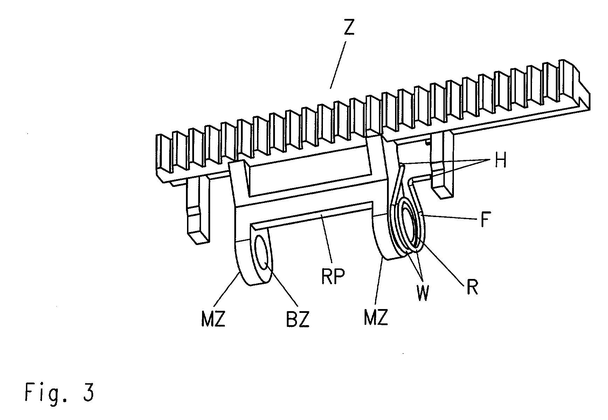

Figure 3 shows in a perspective view an exemplary embodiment of a toothed rack Z, on which two drivers MZ are arranged spaced apart. A guiding bore BZ has been formed in each driver MZ. Provided at one guiding bore BZ of a driver MZ is a centering ring R, which prevents the compression and torsion spring F from coming into contact with the first guiding rod S1, and consequently reduces the friction between the toothed rack Z and the first guiding rod S1. The toothed rack Z can therefore pivot easily about the first guiding rod S1 as a pivot axis. The centering ring R is preferably produced from plastic.

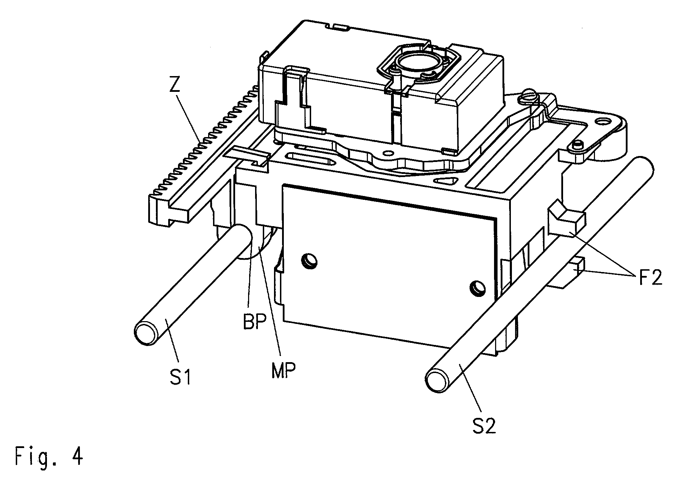

In Figure 4, a second exemplary embodiment of a pickup P is depicted in a perspective representation. It differs from the first exemplary embodiment, shown in Figure 1, in that a further, fork-shaped guide F2 is provided, through which a second guiding rod S2, running parallel to the first guiding rod S1, is passed.

The invention is distinguished by the advantage that natural oscillations of the pickup are greatly damped, or shifted into an uncritical frequency range. To be regarded as a further advantage of the invention is that, using the compression and torsion spring instead of a flexible toothed rack allows a rigid toothed rack to be used, giving rise to the advantage that both the axial play between the toothed rack and the pickup and at the same time the play between the toothed rack and the gearwheel in engagement with it are compensated. Finally, a further advantage comprises that the compression and torsion spring can be configured as an easily and inexpensively producible wire spring.

## Claims

1. A recording or playback machine with a recording or reading device (P) for recording or reading data onto or from an optical data carrier, at least one driver (MP) with a guiding bore (BP) or two drivers (MP) spaced apart, each with a guiding bore (BP), being provided on the recording or reading device (P), through which bore a guiding rod (S1) is passed for guiding the recording or reading device (P), at least one driver (MZ) with a guiding bore (BZ), through which the first guiding rod (S1) is likewise passed, being arranged on a toothed rack (Z), which is in engagement with a gearwheel, and the driver (MZ) of the toothed rack (Z) being arranged between the two drivers (MP) or enclosing one or both drivers (MP) of the recording or reading device (P) on the guiding rod (S1), wherein a compression and torsion spring (F) is provided between at least one driver (MP) of the recording or reading device (P) and at least one driver (MZ) of the toothed rack (Z), to compensate for the axial play between the recording or reading device (P) and the toothed rack (Z), and for pressing the toothed rack (Z), which is supported by the compression and torsion spring (F) on the recording or reading device (P), against the gearwheel.

2. The recording or playback machine as claimed in claim 1, wherein the compression and torsion spring (F) is configured as a one-piece spring comprising a helical spring with at least one turn (W) and a hook (H) at each of the ends of the turn (W) for supporting on the toothed rack (Z) and on the recording or reading device (P).

3. The recording or playback machine as claimed in claim 2, wherein the compression and torsion spring (F) has at least two turns (W).

4. The recording or playback machine as claimed in claim 2 or 3, wherein the compression and torsion spring (F) is produced from wire.

5. The recording or playback machine as claimed in claim 2, 3 or 4, wherein a centering ring (R) is provided between the first guiding rod (S1) and the turns (W) of the compression and torsion spring (F).

6. The recording or playback machine as claimed in claim 5, wherein the centering ring (R) is produced from plastic.

7. The recording or playback machine as claimed in one of claims 1 to 6, wherein two drivers (MZ), which are located between the drivers (MP) of the recording or reading device (P), are arranged spaced apart on the toothed rack (Z).

8. The recording or playback machine as claimed in one of claims 1 to 6, wherein two drivers (MP) of the recording or reading device (P), which enclose two drivers (MP) of the recording or reading device (P), are arranged spaced apart on the toothed rack (Z).

9. The recording or playback machine as claimed in one of claims 1 to 8, wherein, to stiffen the toothed rack (Z), its drivers (MZ) are connected to each other by means of a rib (RP).

10. The recording or playback machine as claimed in one of claims 1 to 9, wherein a fork-shaped guide (F2), through which a second guiding rod (S2) which runs parallel to the first guiding rod (S1) is passed, is provided on the recording or reading device.

11. The recording or playback machine as claimed in one of claims 1 to 10, wherein the toothed rack (Z) can pivot about the first guiding rod (S1).
